# EUROPEAN PATENT SPECIFICATION

(11) **EP 2 141 351 B1**
(45) Date of publication and mention of the grant of the patent: **19.04.2023**
(21) Application number: 09164435.1
(22) Date of filing: 02.07.2009
(51) Int. Cl.: F02N 11/08, F02D 41/06, F02D 41/00, F02D 41/04, F02D 41/14, F02D 41/18, F02D 9/02, F02D 11/10

(54) **Stop and start control device for a combustion engine with throttle valve**
Steuerungsvorrichtung zum Abstellen und erneuten Starten einer Brennkraftmaschine mit einer Drosselklappe
Dispositif de contrôle automatique d'arrêt/redémarrage pour moteur à combustion avec papillon

(30) Priority: 02.07.2008 JP 2008173793
(43) Date of publication of application: 06.01.2010
(73) Proprietor: TOYOTA JIDOSHA KABUSHIKI KAISHA, Toyota-shi, Aichi-ken, 471-8571 (JP)
(72) Inventor: Okamura, Kouji, Toyota-shi, Aichi-ken 471-8571 (JP); Hatta, Yuuji, Toyota-shi, Aichi-ken 471-8571 (JP)
(74) Representative: Cabinet Beau de Loménie

(56) References cited:
- EP-A1- 1 367 246
- EP-A2- 1 329 622
- WO-A2-2008/072063
- US-A1- 2007 261 668
- US-A1- 2009 132 155

## Description

### BACKGROUND OF THE INVENTION

### 1. Field of the Invention

The invention relates to an idling stop control device provided with controlling means for automatically stopping or restarting an engine.

### 2. Description of the Related Art

A so-called eco-run control device aims to improve fuel efficiency by automatically stopping an engine by completely closing a throttle valve when there is a command to automatically stop the engine (i.e., an engine-stop command), which may be in the form of a clutch pedal being released (i.e., operated OFF), for example, when a manual transmission is in neutral while waiting for a traffic signal, for example, when a vehicle is running. Then after the engine has stopped, the eco-run control device enables the vehicle to take off from a standstill by automatically restarting the engine when there is a command to automatically start the engine (i.e., an engine-restart command), which may be in the form of the clutch pedal being depressed (i.e., operated ON), for example. In this case, at times such as when the engine is warming up, even if there is an engine-stop command from the clutch pedal being released (i.e., operated OFF), for example, this engine-stop command is cancelled to inhibit exhaust emissions from deteriorating during engine warm-up.

However, because the eco-run control device stops the engine by completely closing the throttle valve when there is an engine-stop command, a vacuum (i.e., negative pressure) is produced in the intake passage downstream of the throttle valve when the engine stops. As a result, exhaust gas may flow back into the intake passage downstream of the throttle valve, which may adversely affect the ability of the engine to restart.

Therefore, technology has been developed which aims to prevent the backflow of exhaust gas to obtain good startability by opening the throttle valve when the

Amended description - main and first auxiliary requests engine is stopped in order to balance the pressure inside the intake passage downstream of the throttle valve with that of the ambient air (see Japanese Patent Application Publication No. 2005-291120 (JP-A-2005-291120), for example).

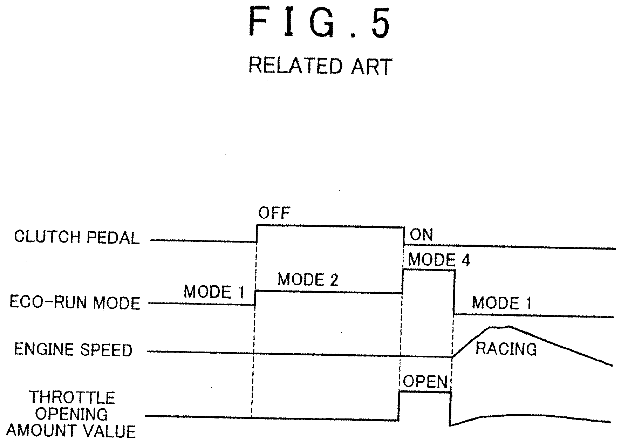

However, with an eco-run control device, regardless of whether the engine has finished warming up, there may be times when the throttle valve may not completely close for some reason so the engine does not automatically stop, even if the eco-run mode switches to Mode 2 in response to an engine-stop command from the clutch being released (i.e., operated OFF) or the like while waiting at a traffic light, for example, as shown in FIG. 5. In this case, if there is an engine-restart command from the clutch being depressed (i.e., operated ON) or the like while the engine-stop command is still in effect, i.e., while the eco-run mode is still Mode 2, the eco-run mode switches to Mode 4, in which the throttle valve is opened further to improve restartability of the engine. This further opening of the throttle valve results in the air upstream of the throttle valve being added to the air in the intake passage downstream of the throttle valve, which causes the engine to race or overspeed. This racing or overspeeding of the engine depends on the engine speed when the engine does not automatically stop even if there is an engine-stop command (i.e., when the eco-run mode is Mode 2). A problem occurs when this engine speed upon which racing depends is higher than a speed at which the engine will not stop from the time of the engine-stop command until there is an engine-restart command (i.e., a speed that is slightly lower than idling speed).

EP1329622A2 describes a further idling stop control device, where the throttle valve opening is controlled.

### SUMMARY OF THE INVENTION

This invention thus provides an idling stop control device that is able to suppress racing in an engine when there is a restart command while an engine-stop command is still in effect.

A first aspect of the invention relates to an idling stop control device according to claim 1 provided with controlling means for automatically stopping an engine when there is an engine-stop command and automatically restarting the engine when there is an engine-restart command. In this idling stop control device, the controlling means performs control which adds air into an intake passage downstream of a throttle valve by opening the throttle valve after the engine stops when there is an engine-stop command; and the controlling means prohibits the control which adds air by opening the throttle valve, when the engine does not stop even though there is an engine-stop command so that the speed of the engine is higher than a predetermined speed.

According to this aspect, the controlling means prohibits control that adds air by opening the throttle valve if the engine speed is higher than a predetermined speed when for some reason the engine does not automatically stop when there is an engine-stop command from the clutch being released (i.e., operated OFF) or the like while waiting for a traffic light, for example, when the engine has finished warming up, and there is an engine-restart command from the clutch being depressed (i.e., operated ON) or the like while that engine-stop command is still in effect. As a result, if the engine speed is higher than the predetermined engine speed when there is an engine-restart command while the engine is still running (i.e., when it did not automatically stop), the throttle valve is prevented from opening so air upstream of the throttle valve will not be added to the air in the intake passage downstream of the throttle valve. As a result, the engine can reliably be prevented from racing.

Moreover, if the engine speed is lower than the predetermined speed when there is an engine-restart command while the engine is still running (i.e., when it did not automatically stop), air upstream of the throttle valve is added to the air in the intake passage downstream of the throttle valve by opening the throttle valve. However, even if control to add the air is performed by opening the throttle valve in this way, the engine will race slightly when the air upstream of the throttle valve is added to the air in the intake passage downstream of the throttle valve, but this racing is within an allowable range.

In the structure described above, the predetermined speed may be set to a speed which is slightly lower than an idling speed and at which the engine will not stop from the time of the engine-stop command until there is an engine-restart command.

According to this structure, the predetermined speed is set to a speed which is slightly lower than an idling speed and at which the engine will not stop from the time of the engine-stop command until there is an engine-restart command. Therefore, even if control to add the air is performed by opening the throttle valve when the engine speed is lower than this predetermined speed, the engine will race slightly when the air upstream of the throttle valve is added to the air in the intake passage downstream of the throttle valve, but this racing is within an allowable range.

In the structure described above, the controlling means may prohibit air from being added by opening the throttle valve when the engine does not stop even if a predetermined period of time has passed after the engine-stop command.

According to this structure, the controlling means prohibits control that adds air by opening the throttle valve if the engine speed is higher than a predetermined speed when for some reason the engine does not automatically stop even after a predetermined period of time has passed after there is an engine-stop command from the clutch being released (i.e., operated OFF) or the like while waiting for a traffic light, for example, when the engine has finished warming up, and there is an engine-restart command from the clutch being depressed (i.e., operated ON) or the like while the engine-stop command is still in effect. As a result, if the engine speed is higher than the predetermined engine speed when there is an engine-restart command while the engine is still running (i.e., when it did not automatically stop) even after a predetermined period of time has passed after the engine-stop command, the throttle valve is prevented from opening so air upstream of the throttle valve will not be added to the air in the intake passage downstream of the throttle valve. As a result, the engine can reliably be prevented from racing.

In the structure described above, the controlling means may add air by opening the throttle valve when the engine stops within the predetermined period of time after the engine-stop command.

In the structure described above, the controlling means may prohibit air from being added by opening the throttle valve when the engine does not stop immediately after the engine-stop command.

In the structure described above, the controlling means may add air by opening the throttle valve when the engine does not stop even though there is an engine-stop command, and the speed of the engine is equal to or less than a predetermined speed.

A second aspect of the invention relates to an idling stop control method according to claim 2. This control method includes automatically stopping an engine when there is an engine-stop command and automatically restarting the engine when there is an engine-restart command; performing control which adds air into an intake passage downstream of a throttle valve by opening the throttle valve after the engine stops when there is an engine-stop command; and prohibiting the control which adds air by opening the throttle valve, when the engine does not stop even though there is an engine-stop command so that the speed of the engine is higher than a predetermined speed.

According to this aspect, if the engine speed is higher than a predetermined engine speed and the engine does not stop even if there is an engine-stop command, air upstream of the throttle valve is prevented from being added to the air in the intake passage downstream of the throttle valve by opening the throttle valve, by preventing control that adds air by opening the throttle valve. As a result, racing of the engine is able to be reliably prevented. Moreover, if the engine speed is lower than the predetermined speed and the engine does not stop even if there is an engine-stop command, air upstream of the throttle valve is added to the air in the intake passage downstream of the throttle valve by opening the throttle valve, but engine racing as a result is able to be kept low so that it is within an allowable range.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is a block diagram schematically showing the structure of a vehicle engine using an eco-run control device according to an example embodiment of the invention;
FIG. 2 is a time chart showing the eco-run mode, engine speed, and throttle opening amount value when the engine is automatically stopped by the clutch pedal being released (i.e., operated OFF);
FIG. 3 is a time chart showing the eco-run mode, engine speed, and throttle opening amount value when air amount adding control is prohibited while the engine is automatically stopped by the clutch pedal being released (i.e., operated OFF);
FIG. 4 is a flowchart illustrating the a routine for executing or prohibiting air amount adding control of the throttle valve by an eco-run ECU; and
FIG. 5 is a time chart according to an eco-run control device of related art, which shows the eco-run mode, engine speed, and throttle opening amount value when air amount adding control is executed while the engine is not automatically stopped by the clutch pedal being released (i.e., operated OFF).

### DETAILED DESCRIPTION OF AN EMBODIMENT

An example embodiment of the present invention will be described in greater detail below with reference to the accompanying drawings.

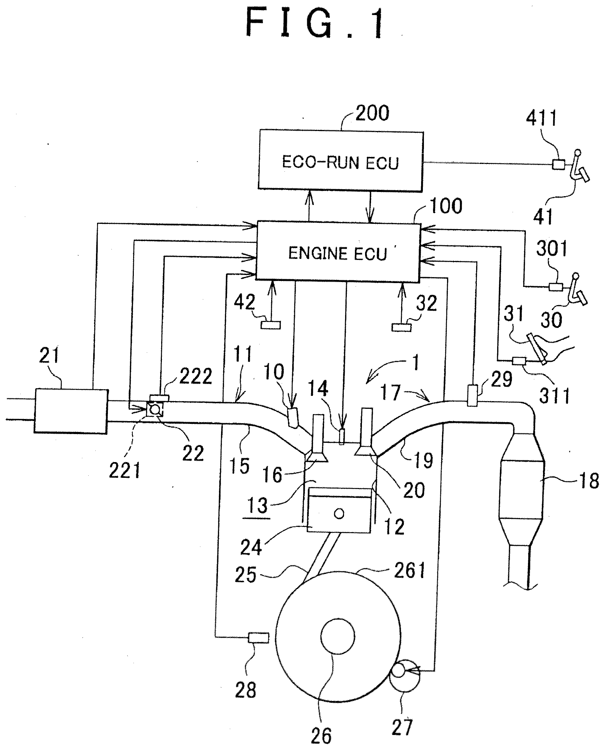

FIG. 1 schematically shows the structure of a vehicle engine using an idling stop control device (hereinafter referred to as an eco-run control device) according to an example embodiment of the invention.

The engine 1 is an in-line multiple cylinder type petrol engine (only one cylinder is shown in FIG. 1). In this engine 1, petrol is injected from a fuel injector 10 into an intake passage 11 where it mixes with air. The resultant air-fuel mixture that forms is then ignited by a spark plug 14 in a combustion chamber 13 in a cylinder 12, and exhaust gas produced by the combustion is discharged through an exhaust passage 17. Incidentally, the fuel is not limited to being petrol, e.g., it may also be alcohol or a liquefied natural gas such as LPG.

The intake passage 11 is formed divided into a surge tank and an intake manifold, neither of which is shown, and an intake port 15. In particular, the downstream end portion of the intake passage 11 is formed divided into an intake port 15 for each cylinder. The outlet (i.e., the downstream end) of each intake port 15 is opened and closed with respect to the combustion chamber 13 of the corresponding cylinder by an intake valve 16. The intake valve 16 is mechanically opened and closed by a camshaft, not shown, which is rotatably driven in synchronisation with the engine 1.

The fuel injector 10 is provided in the intake passage 11 facing the intake port 15, and injects fuel toward the intake port 15.

The exhaust passage 17 is formed divided into an exhaust port 19 that is connected to each cylinder, an exhaust manifold, not shown, and a catalyst 18. In particular, the upstream end portion of the exhaust passage 17 is formed divided into an exhaust port 19 for each cylinder. The inlet (i.e., the upstream end) of each exhaust port 19 is opened and closed with respect to the combustion chamber 13 of the corresponding cylinder by an exhaust valve 20.

The catalyst 18 is provided midway in the exhaust passage 17 and removes harmful substances such as CO, HC, and NOₓ that are in the exhaust gas. Incidentally, the catalyst 18 in this example embodiment is a three-way catalyst, but it may also be an oxidation catalyst or a NOₓ catalyst or the like. Also, the catalyst 18 may be provided in plurality.

An airflow meter 21, a throttle valve 22, and the fuel injector 10 are provided in order from the upstream side in the intake passage 11. The airflow meter 21 outputs a signal indicative of the flowrate of air flowing through it to an electronic control unit 100 which serves as controlling means of the engine 1 (hereinafter this electronic control unit will be referred to as the "engine ECU 100"). The throttle valve 22 is an electrically operated throttle valve. The opening amount of this throttle valve 22 is adjusted by a throttle actuator 221 that is driven based on a signal from the engine ECU 100.

A piston 24 is housed so as to be able to move back and forth in the cylinder 12. The piston 24 is connected to a crankshaft 26 via a connecting rod 25. A starter 27 for starting the engine 1 is provided near the crankshaft 26. This starter 27 is in mesh with a ring gear 261 provided on the end portion of the crankshaft 26, and drives the crankshaft 26 at startup of the engine 1.

Now the electrical configuration of the engine ECU 100 will be described. The engine ECU 100 includes a microcomputer that is formed of a CPU, ROM, and RAM and the like. Also, a crank angle sensor 28, an oxygen concentration sensor 29, an accelerator operation amount sensor 301, a brake switch 311, and a vehicle speed sensor 32, in addition to the fuel injector 10, the spark plug 14, the airflow meter 21, the throttle actuator 221, and the starter 27 described above, are connected to the engine ECU 100.

The fuel injector 10 is opened and closed based on an ON/OFF signal output from the engine ECU 100, and starts and stops fuel injection in response to this signal.

The spark plug 14 discharges a spark based on an ignition signal output from the engine ECU 100.

The throttle valve 22 is a butterfly valve and is arranged in the intake passage 11. In addition, a throttle opening amount sensor 222 that detects the opening amount of the throttle valve 22 is also provided. The engine ECU 100 normally controls the throttle actuator 221 so that the opening amount value of the throttle opening amount sensor 222 becomes a value that corresponds to the detection value of the accelerator operation amount sensor 301.

Here, the accelerator operation amount sensor 301 outputs a signal indicative of the operation amount (i.e., depression amount) of an accelerator pedal 30 by a driver to the engine ECU 100.

The starter 27 is turned on and off based on an ON/OFF signal output from the engine ECU 100.

The crankshaft sensor 28 outputs a pulse signal at predetermined phase intervals of the crankshaft 26 to the engine ECU 100. The engine ECU 100 detects the phase of the crankshaft 26 based on this pulse signal and calculates the rotation speed of the crankshaft 26, i.e., the engine speed.

The oxygen concentration sensor 29 outputs a signal indicative of the oxygen concentration in the exhaust gas to the engine ECU 100.

The brake switch 311 outputs an ON/OFF signal indicative of the operation of the brake pedal 31 by the driver to the engine ECU 100. In this case, the brake switch 311 outputs an ON signal when the brake pedal 31 is being operated.

The vehicle speed sensor 32 outputs a signal indicative of the speed of the vehicle (i.e., the vehicle speed) to the engine ECU 100.

The engine ECU 100 controls the fuel injection quantity, the fuel injection timing, and the ignition timing according to the operating state of the engine. That is, the engine ECU 100 mainly determines the fuel injection quantity and fuel injection timing by the fuel injector 10, as well as the ignition timing of the spark plug 14, based on a pre-stored map from the engine speed obtained by the crankshaft sensor 28 and the engine load obtained by the throttle opening amount sensor 222, and then controls the fuel injector 10 and the spark plug 14 based on these values.

Also, an electronic control unit 200 that serves as an eco-run control device which automatically controls the stopping and restarting of the engine 1 (hereinafter this electronic control unit will be referred to as the "eco-run ECU 200") is connected to the engine ECU 100 so that data communication between the two is possible. This eco-run ECU 200 is an electronic control apparatus that takes precedence over the engine ECU 100, and includes a microcomputer formed of a CPU, ROM, and RAM and the like. Also, the eco-run ECU 200 constitutes an engine control system that automatically stops the engine 1 according to an engine-stop command when an engine-stop condition is satisfied, and restarts the stopped engine 1 when an engine-restart condition is satisfied.

A clutch switch 411 that detects when a clutch pedal 41 is depressed (i.e., operated ON), as well as detects when the clutch pedal 41 is released (i.e., operated OFF), is connected to the eco-run ECU 200.

Moreover, a coolant temperature sensor 42 that detects the temperature of the coolant of the engine 1, as well as a shift position sensor, not shown, that detects the shift position of a transmission, are connected to the engine ECU 100.

The eco-run ECU 200 uses information received from the clutch switch 411 and information obtained from the engine ECU 100 via a communication line to make determinations regarding conditions to issue commands to start and stop the engine 1. That is, the engine ECU 100 and the eco-run ECU 200 receive some control data that is necessary for control from each other through data communication. This control data is shared between the two ECUs 100 and 200. In this case, the eco-run ECU 200 receives a signal indicative of the engine speed calculated by the engine ECU 100, as well as an output signal from the throttle opening amount sensor 222, and the like.

The eco-run ECU 200 determines whether a condition to issue a command to stop the engine 1, a so-called engine-stop command, is satisfied based on the signals input from the group of sensors obtained through data communication as described above. More specifically, the eco-run ECU 200 determines, for example, whether the coolant temperature is equal to or greater than 40°C, whether the brake pedal 31 is being depressed, whether the vehicle speed is 0, and whether the clutch pedal 41 is being depressed while the transmission is in neutral, and the like. When these are satisfied, the eco-run ECU 200 determines that the condition to issue an engine-stop command is satisfied.

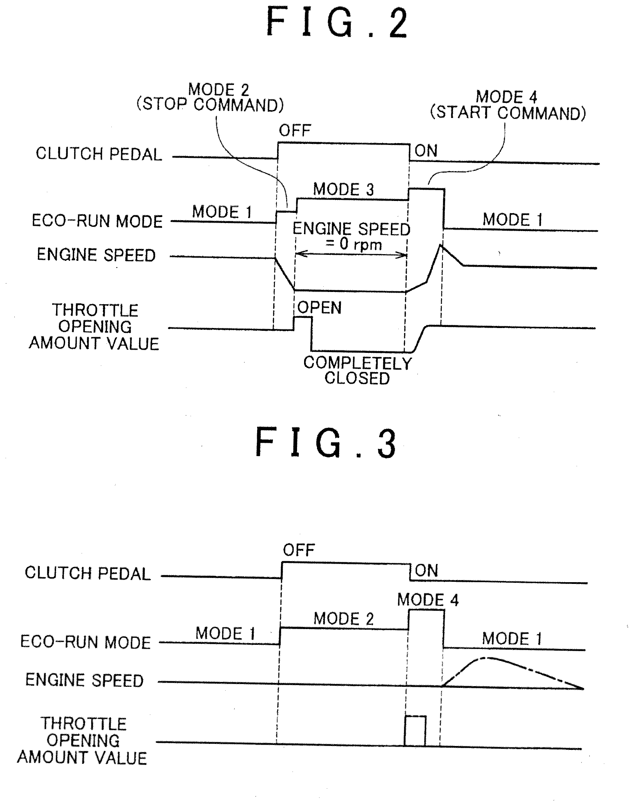

Also, as shown in FIG. 2, when the condition to issue an engine-stop command is satisfied, the eco-run ECU 200 switches the eco-run mode to Mode 2 and outputs a signal indicative of an engine-stop command to the engine ECU 100. At this time, the engine ECU 100 determines whether a condition to issue an engine-stop command is satisfied. More specifically, the engine ECU 100 determines that a condition to issue an engine-stop command as directed by the eco-run ECU 200 (i.e., eco-run mode: Mode 2) is satisfied when the clutch pedal 41 is released (i.e., operated OFF) while the transmission is in neutral, the engine 1 has finished warming up (i.e., the coolant temperature is 40°C or higher), the accelerator pedal 30 is completely released (i.e., the throttle valve 22 is completely closed), and the vehicle speed is 0, and the like, the latter three conditions being conditions that are set in advance.

When the condition to issue an engine-stop command is satisfied in the engine ECU 100, the engine ECU 100 allows the eco-run ECU 200 to switch the eco-run mode to Mode 3 and completely closes the throttle valve 22. A fuel cut to stop the engine 1 is executed at the same time that the throttle valve 22 is completely closed. Meanwhile, if the condition to issue an engine-stop command is not satisfied in the engine ECU 100, the eco-run mode will not be switched to Mode 3 by the eco-run ECU 200.

On the other hand, the eco-run ECU 200 determines whether a condition to issue a command to restart the engine 1, a so-called engine-restart command, (i.e., eco-run mode: Mode 4) is satisfied based on the signals received from the group of sensors obtained through data communication as described above. More specifically, the eco-run ECU 200 determines that the condition to issue an engine-restart command is satisfied when the clutch pedal 41 is depressed (i.e., operated ON), in which case the eco-run mode switches to Mode 4. If this condition to issue an engine-restart command is satisfied, the eco-run ECU 200 outputs a signal indicative of an engine-restart command to the engine ECU 100. At this time, the engine ECU 100 starts fuel injection control and switches to the normal engine control operation. Accordingly, the engine 1 resumes operation after being stopped (i.e., eco-run mode: Mode 3) by the eco-run ECU 200.

Also, when the condition to issue an engine-stop command is satisfied from the clutch pedal 41 being released (i.e., operated OFF) (i.e., eco-run mode: Mode 2), the eco-run ECU 200 stops the engine 1 (reduces the engine speed to 0 rpm) by completely closing the throttle valve 22. Therefore, when the engine 1 is stopped (i.e., eco-run mode: Mode 3), the eco-run ECU 200 temporarily opens the throttle valve 22 so that the pressure inside the intake passage 11 downstream of the throttle valve 22 balances with that of the ambient air. This is done because there is a possibility that exhaust gas may flow back into the intake passage 11 downstream of the throttle valve 22 due to a vacuum (negative pressure) that is produced in the intake passage 11 downstream of the throttle valve 22 when the engine 1 is stopped (i.e., eco-run mode: Mode 3). In order to improve the restartability of the engine 1, the throttle valve 22 is temporarily opened after the engine 1 has stopped to add air upstream of the throttle valve 22 to the air in the intake passage 11 downstream of the throttle valve 22.

As shown in FIG. 5, regardless of whether the engine has finished warming up, there may be times when the engine 1 does not automatically stop for some reason, even if a condition to issue an engine-stop command is satisfied by the clutch pedal 41 being released (i.e., operated OFF) (i.e., eco-run mode: Mode 2), as shown in FIG. 3. In this case, the eco-run mode stays in Mode 2 instead of switching to Mode 3. If there is an engine-restart command (i.e., eco-run mode: Mode 4) from the clutch pedal 41 being depressed (i.e., operated ON) when restarting the engine 1 when the eco-run mode is Mode 2, the throttle valve 22 is opened further, as shown by the alternate long and short dash line in FIG. 3. If at this time the engine speed while the eco-run mode remains in Mode 2 is higher than a speed at which the engine 1 will not stop (i.e., a speed slightly lower than idling speed) and air upstream of the throttle valve 22 is added to the air in the intake passage 11 downstream of the throttle valve 22 due to the throttle valve 22 being opened further, the engine will race (i.e., overspeed), as shown by the alternate long and short dash line in FIG. 3.

Therefore, in this example embodiment, the eco-run ECU 200 prohibits control to add air upstream of the throttle valve 22 to the air in the intake passage 11 downstream of the throttle valve 22 by opening the throttle valve 22 if i) the engine 1 does not automatically stop after a predetermined period of time (such as 250 milliseconds) has passed after a condition to issue an engine-stop command is satisfied (i.e., eco-run mode: Mode 2), and ii) the engine speed is higher than a predetermined speed when there is an engine-restart command from the clutch pedal 41 being depressed (i.e., operated ON), for example, while the condition to issue the engine-stop command is still satisfied (i.e., eco-run mode: Mode 2). With this kind of control, the engine speed will not race, as shown by the solid line in FIG. 3. In this case, the predetermined speed is set to a speed at which the engine 1 will not stop, i.e., a speed (such as 500 rpm) that is slightly lower than idling speed (e.g., 650 rpm), from the time of the engine-stop command until there is an engine-restart command (i.e., while the eco-run mode remains Mode 2).

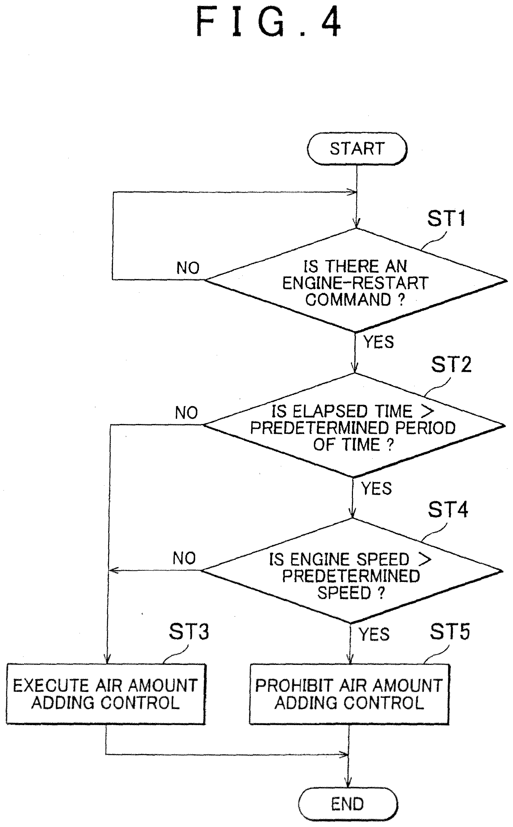

Next, the control of the throttle valve 22 by the eco-run ECU 200, i.e., a routine to execute or prohibit air amount adding control that adds air upstream of the throttle valve 22 to the air in the intake passage 11 downstream of the throttle valve 22, will be described with reference to the flowchart in FIG. 4. In this routine, it is assumed that for one reason or another the engine 1 does not automatically stop, i.e., the eco-run mode remains in Mode 2 instead of switching to Mode 3, even though the engine 1 has finished warming up and the condition to issue an engine-stop command is satisfied (i.e., the eco-run mode is Mode 2) by the clutch pedal 41 being released (i.e., operated OFF), as shown in FIG. 3.

First, in step ST1 in the flowchart in FIG. 4, the eco-run ECU 200 waits until there is an ON signal from the clutch switch 411 while the eco-run mode is Mode 2, i.e., until there is an engine-restart command (i.e., eco-run mode: Mode 4) by the clutch pedal 41 being depressed (i.e., operated ON).

Then in step ST2, the eco-run ECU 200 determines whether the elapsed time after the eco-run mode has switched from Mode 1 to Mode 2 is longer than a predetermined period of time (such as 250 milliseconds). If the determination in step ST2 is no, i.e., if the period of time passed after the eco-run mode has switched to Mode 2 is within the predetermined period of time, the eco-run ECU 200 determines that the engine 1 has automatically stopped before the predetermined period of time passed, so the process proceeds on to step ST3 where air amount adding control is executed. More specifically, the eco-run ECU 200 executes air amount adding control that adds air upstream of the throttle valve 22 to the air in the intake passage 11 downstream of the throttle valve 22 by opening the throttle valve 22.

If, on the other hand, the determination in step ST2 is yes, i.e., if period of time passed after the eco-run mode has switched to Mode 2 is longer than the predetermined period of time, the process proceeds on to step ST4. In step ST4, the eco-run ECU 200 determines whether the engine speed is greater than a predetermined speed (such as 500 rpm) when the eco-run mode remains Mode 2.

If the determination in step ST4 is yes, i.e., if the engine speed is greater than the predetermined speed, the eco-run ECU 200 prohibits air amount adding control in step ST5. More specifically, the eco-run ECU 200 prohibits air amount adding control that adds air upstream of the throttle valve 22 to the air in the intake passage 11 downstream of the throttle valve 22 by opening the throttle valve 22. If, on the other hand, the determination in step ST4 is no, i.e., if the engine speed is equal to or less than the predetermined speed, the process proceeds on to step ST3.

In this way, according to this example embodiment, if for one reason or another the engine 1 does not automatically stop even after the predetermined period of time (such as 250 milliseconds) has passed and the eco-run mode remains Mode 2 even though there is an engine-stop command from the clutch pedal 41 being released (i.e., operated OFF) (i.e., eco-run mode: Mode 2) while waiting for a traffic light for example, when the engine 1 has finished warming up, the eco-run ECU 200 prohibits the air amount adding control that adds air upstream of the throttle valve 22 to the air in the intake passage 11 downstream of the throttle valve 22 by opening the throttle valve 22 from being executed if the engine speed while the eco-run mode remains in Mode 2 is higher than the predetermined speed (such as 500 rpm) when there is an engine-restart command from the clutch pedal 41 being depressed (i.e., operated ON) while the engine-stop command is still in effect.

Accordingly, if the engine speed is higher than the predetermined speed (such as 500 rpm) when there is an engine-restart command from the clutch pedal 41 being depressed (i.e., operated ON) in a situation in which the engine 1 does not automatically stop even though the predetermined period of time (such as 250 milliseconds) has passed, and the eco-run mode remains in Mode 2, air upstream of the throttle valve 22 will not be added to the air in the intake passage 11 downstream of the throttle valve 22 by opening the throttle valve 22, so racing of the engine can be reliably prevented.

Moreover, if the engine speed is equal to or less than the predetermined speed when there is an engine-restart command from the clutch pedal 41 being depressed (i.e., operated ON) in a situation in which the engine 1 does not automatically stop and the eco-run mode remains in Mode 2 even though the predetermined period of time has passed, air upstream of the throttle valve 22 will be added to the air in the intake passage 11 downstream of the throttle valve 22 by opening the throttle valve 22. In this case, even if the air amount adding control is performed by opening the throttle valve 22, the engine 1 will race slightly when the air upstream of the throttle valve 22 is added to the air in the intake passage 11 downstream of the throttle valve 22, but this racing is able to be kept within an allowable range.

Incidentally, the invention is not limited to the example embodiment described above, but also includes various modified examples. For example, in the example embodiment described above, the air amount adding control is prohibited when the engine speed is higher than a predetermined speed (such as 500 rpm) when there is an engine-restart command from the clutch pedal 41 being depressed (i.e., operated ON) in a situation in which the eco-run mode remains in Mode 2 and the engine 1 does not automatically stop even though the predetermined period of time has passed. Alternatively, however, only the engine speed when there is an engine-restart command from the clutch pedal 41 being depressed (i.e., operated ON) in a situation in which the eco-run mode remains in Mode 2, regardless of the time until the engine automatically stops, may be used as the determination reference, and the air amount adding control may be prohibited when the engine speed at that time is higher than a predetermined speed.

Also, in the example embodiment described above, the engine-stop and engine-restart commands are issued in response to ON/OFF operations of the clutch pedal 41. Alternatively, however, these commands may be issued in response to ON/OFF operations of an accelerator pedal.

## Claims

1. An idling stop control device (200) provided with controlling means for automatically stopping an engine (1) when there is an engine-stop command and automatically restarting the engine (1) when there is an engine-restart command,
the controlling means being configured to perform a control to add air into an intake passage (11) downstream of a throttle valve (22) by opening the throttle valve (22);
the controlling means being configured to perform the control when the engine (1) is stopped (Mode 3), wherein the speed of the engine is zero when the engine is stopped;
**characterized in that**:
the controlling means is configured to prohibit the execution of the control (ST5) if the engine-restart command occurs (ST1) in response to a clutch pedal being depressed when the speed of the engine (1) is higher than a predetermined speed (ST4) after a predetermined period of time has passed since the condition to issue the engine-stop command was satisfied (ST2) even though the engine has finished warming up;
wherein the controlling means is configured to execute the control (ST3) in a response to a clutch pedal being depressed if the predetermined period of time has not passed; or
if the predetermined period of time has passed but the speed of the engine (1) is equal to or less than the predetermined speed.

2. An idling stop control method comprising:
automatically stopping an engine (1) when there is an engine-stop command and automatically restarting the engine (1) when there is an engine-restart command;
performing a control that adds air into an intake passage (11) downstream of a throttle valve (22) by opening the throttle valve (22), when the engine (1) is stopped (Mode 3), wherein the speed of the engine is zero when the engine is stopped,
**characterized by**:
prohibiting the execution of the control (ST5)if the engine-restart command occurs (ST1) in response to a clutch pedal being depressed when the speed of the engine (1) is higher than a predetermined speed (ST4)after a predetermined period of time has passed since the condition to issue the engine-stop command was satisfied (ST2) even though the engine has finished warming up;
wherein the controlling means is configured to execute the control (ST3) in a response to a clutch pedal being depressed if the predetermined period of time has not passed; or
if the predetermined period of time has passed but the speed of the engine (1) is equal to or less than the predetermined speed.

## Patentansprüche

1. Leerlaufabstell-Steuervorrichtung (200), die mit einem Steuerungsmittel zum automatischen Abstellen eines Motors (1), wenn ein Motorabstellbefehl vorliegt, und zum automatischen erneuten Starten des Motors (1) versehen ist, wenn ein Motorneustartbefehl vorliegt,
wobei das Steuerungsmittel dazu ausgestaltet ist, eine Steuerung zum Hinzufügen von Luft in einen Einlasskanal (11), der einer Drosselklappe (22) nachgeschaltet ist, durch Öffnen der Drosselklappe (22) durchzuführen;
das Steuerungsmittel dazu ausgestaltet ist, die Steuerung durchzuführen, wenn der Motor (1) abgestellt ist (Modus 3), wobei die Drehzahl des Motors gleich null ist, wenn der Motor abgestellt ist,
**dadurch gekennzeichnet, dass**:
das Steuerungsmittel dazu ausgestaltet ist, die Ausführung der Steuerung zu unterbinden (ST5), wenn der Motorneustartbefehl als Reaktion auf das Drücken eines Kupplungspedals auftritt (ST1), wenn die Drehzahl des Motors (1) höher ist als eine vorbestimmte Drehzahl (ST4), nachdem ein vorbestimmter Zeitraum verstrichen ist, seit die Bedingung zur Ausgabe des Motorabstellbefehls erfüllt wurde (ST2), obgleich das Warmlaufen des Motors abgeschlossen ist;
wobei das Steuerungsmittel dazu ausgestaltet ist, die Steuerung als Reaktion auf das Drücken eines Kupplungspedals auszuführen (ST3), wenn der vorbestimmte Zeitraum nicht verstrichen ist; oder
wenn der vorbestimmte Zeitraum verstrichen ist, aber die Drehzahl des Motors (1) gleich oder kleiner als die vorbestimmte Drehzahl ist.

2. Leerlaufabstell-Steuerverfahren, das Folgendes umfasst:
automatisches Abstellen eines Motors (1), wenn ein Motorabstellbefehl vorliegt, und automatisches erneutes Starten des Motors (1), wenn ein Motorneustartbefehl vorhanden ist;
Durchführen einer Steuerung, die einem Einlasskanal (11), der einer Drosselklappe (22) nachgeschaltet ist, durch Öffnen der Drosselklappe (22) Luft hinzufügt, wenn der Motor (1) abgestellt ist (Modus 3), wobei die Drehzahl des Motors gleich null ist, wenn der Motor abgestellt ist,
**gekennzeichnet durch**:
Unterbinden der Ausführung der Steuerung (ST5), wenn der Motorneustartbefehl als Reaktion auf das Drücken eines Kupplungspedals auftritt (ST1), wenn die Drehzahl des Motors (1) höher ist als eine vorbestimmte Drehzahl (ST4), nachdem ein vorbestimmter Zeitraum verstrichen ist, seit die Bedingung zur Ausgabe des Motorabstellbefehls erfüllt wurde (ST2), obgleich das Warmlaufen des Motors abgeschlossen ist;
wobei das Steuerungsmittel dazu ausgestaltet ist, die Steuerung als Reaktion auf das Drücken eines Kupplungspedals auszuführen (ST3), wenn der vorbestimmte Zeitraum nicht verstrichen ist; oder
wenn der vorbestimmte Zeitraum verstrichen ist, aber die Drehzahl des Motors (1) gleich oder kleiner als die vorbestimmte Drehzahl ist.

## Revendications

1. Dispositif de commande d'arrêt au ralenti (200) pourvu de moyens de commande destinés à arrêter automatiquement un moteur (1) quand il y a une commande d'arrêt de moteur et à redémarrer automatiquement le moteur (1) quand il y a une commande de redémarrage de moteur,
les moyens de commande étant configurés pour réaliser une commande pour ajouter de l'air dans un passage d'admission (11) en aval d'un papillon des gaz (22) en ouvrant le papillon des gaz (22) ;
les moyens de commande étant configurés pour réaliser la commande quand le moteur (1) est arrêté (Mode 3), la vitesse du moteur étant de zéro quand le moteur est arrêté ;
**caractérisé en ce que** :
les moyens de commande sont configurés pour interdire l'exécution de la commande (ST5) si la commande de redémarrage de moteur se produit (ST1) en réponse à un enfoncement d'une pédale d'embrayage quand la vitesse du moteur (1) est plus élevée qu'une vitesse prédéterminée (ST4) une fois qu'une durée prédéterminée s'est écoulée depuis que la condition pour délivrer la commande d'arrêt de moteur a été satisfaite (ST2) même si le moteur a fini de monter en température ;
les moyens de commande étant configurés pour exécuter la commande (ST3) en réponse à un enfoncement d'une pédale d'embrayage si la durée prédéterminée ne s'est pas écoulée ; ou
si la durée prédéterminée s'est écoulée mais la vitesse du moteur (1) est égale ou inférieure à la vitesse prédéterminée.

2. Procédé de commande d'arrêt au ralenti comprenant le fait de :
arrêter automatiquement un moteur (1) quand il y a une commande d'arrêt de moteur et redémarrer automatiquement le moteur (1) quand il y a une commande de redémarrage de moteur ;
réaliser une commande qui ajoute de l'air dans un passage d'admission (11) en aval d'un papillon des gaz (22) en ouvrant le papillon des gaz (22), quand le moteur (1) est arrêté (Mode 3), la vitesse du moteur étant de zéro quand le moteur est arrêté,
**caractérisé par** le fait de :
interdire l'exécution de la commande (ST5) si la commande de redémarrage de moteur se produit (ST1) en réponse à un enfoncement d'une pédale d'embrayage quand la vitesse du moteur (1) est plus élevée qu'une vitesse prédéterminée (ST4) une fois qu'une durée prédéterminée s'est écoulée depuis que la condition pour délivrer la commande d'arrêt de moteur a été satisfaite (ST2) même si le moteur a fini de monter en température ;
les moyens de commande étant configurés pour exécuter la commande (ST3) en réponse à une pédale d'embrayage qui est enfoncée si la durée prédéterminée ne s'est pas écoulée ; ou
si la durée prédéterminée s'est écoulée mais la vitesse du moteur (1) est égale ou inférieure à la vitesse prédéterminée.
